Europäisches Patentamt

European Patent Office

Office européen des brevets

(11) Numéro de publication: **0 301 934 B1**

## (12) FASCICULE DE BREVET EUROPEEN

(45) Date de publication de fascicule du brevet: **12.05.93**   (51) Int. Cl.⁵: **H04L 12/56**

(21) Numéro de dépôt: **88401796.3**

(22) Date de dépôt: **08.07.88**

(54) **Système de commutation temporel de paquets de différentes longueurs.**

(30) Priorité: **30.07.87 FR 8710824**

(43) Date de publication de la demande:
**01.02.89 Bulletin 89/05**

(45) Mention de la délivrance du brevet:
**12.05.93 Bulletin 93/19**

(84) Etats contractants désignés:
**DE GB IT**

(56) Documents cités:
**EP-A- 0 014 152**
**EP-A- 0 059 149**
**EP-A- 0 113 639**
**FR-A- 2 526 613**

(73) Titulaire: **FRANCE TELECOM**
**6, Place d'Alleray**
**F- 75015 Paris(FR)**

(72) Inventeur: **Servel, Michel**
**Le Rhu en Servel**
**F- 22300 Lannion(FR)**
Inventeur: **Gonet, Patrick**
**Kerninon**
**F- 22660 Trelevern(FR)**
Inventeur: **Ouinquis, Jean-Paul**
**14, rue de Cornic**
**F- 22700 Perros Guirec(FR)**

(74) Mandataire: **Cabinet Martinet & Lapoux**
**BP 405**
**F- 78055 Saint Ouentin en Yvelines Cédex**
**(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.6/3.3.1)

## Description

La présente invention concerne de manière générale la commutation de paquets de différence longueurs convoyés par des multiplex temporels asynchrones. Plus particulièrement l'invention concerne un système de commutation apte à traiter des paquets de différentes longueurs multiples ou sous−multiples d'une longueur prédéterminée.

La nécessité de traiter dans les commutateurs des paquets de différentes longueurs peut s'imposer dans l'avenir afin de limiter à moins d'une milliseconde, pour des services de parole, le temps de traversée des commutateurs. Le taux de remplissage des paquets relatifs à des services de parole peut être réduit par rapport au taux de remplissage des paquets d'autres services, par exemple lors d'une phase transitoire de migration des services de parole du réseau commuté actuel, à 64 kbit/s, vers un réseau temporel asynchrone universel (RTA), afin de limiter pour ces paquets des temps d'attente moyens dans les équipements d'empaquetage et de dépaquetage des commutateurs. Un commutateur doit alors être apte au traitement de paquets de différentes longueurs .

Par ailleurs la coexistence au niveau mondial de plusieurs normes relatives au format des paquets implique que les commutateurs intervenant dans des liaisons de communication internationales puissent traiter des paquets de différentes longueurs.

Le brevet FR−B−2538976, dont la priorité est revendiquée dans la EP−A−0113639 divulgue un système de commutation de paquets synchrones de longueur fixe dans lequel est utilisée une conversion "parallèle−diagonale" dite "paragonale" afin de remédier à la lenteur de convertisseurs série−parallèle et parallèle−série utilisés de manière classique dans des commutateurs temporels. Un tel système de commutation présente un faible temps de traversée. Toutefois, il est inapte tel quel, au traitement de paquets de différentes longueurs.

La demande européenne EP−A−0059149 divulgue un commutateur hybride à commutation de circuit et de paquets à architecture à bus distribué entre des stations de commutation de transmission−réception. Dans une station, les paquets sont mémorisés préalablement sans aucune indication de longueur de paquet, dans une première mémoire FIFO d'arrivée. La partie de commutation de paquets dans une station étant organisée autour d'un microprocesseur, ce dernier calcule la longueur des paquets mémorisés dans la mémoire FIFO d'arrivée puis les écrit dans une file d'attente commune où sont mémorisés, d'une part des paquets et, d'autre part des mots échantillons de communications en mode circuit de longueurs différentes. Cette longueur de paquet est uniquement utilisée afin que le microprocesseur puisse distinguer et lire ultérieurement sans erreur, les paquets mémorisés dans cette file d'attente commune, compte tenu de leur mémorisation en commun avec des mots échantillons (mode−circuit) ayant des longueurs différentes. Ensuite ces paquets lus sont écrits dans une mémoire FIFO de départ pour être transmis par un circuit HDLC vers un commutateur suivant ou une station d'utilisateur. Les paquets sont en fait gérés par des liaisons HDLC entre commutateurs indépendamment de la longueur constante de ces paquets. Un tel commutateur nécessite six mémoires−tampons uniquement pour la gestion des paquets dans chaque station de transmission−réception.

L'invention vise principalement à fournir un système de commutation pour des paquets de différentes longueurs multiples ou sous−multiples d'une longueur type.

A cette fin, un système de commutation selon l'invention est tel que défini par la revendication 1.

Un autre objectif de l'invention est de fournir un système de commutation pour des paquets de différentes longueurs multiples ou sous−multiples d'une longueur type et dans lequel une conversion paragonale de blocs de paquet est mise en oeuvre.

A cette fin, le système de commutation est tel que défini par la revendication 2.

L'invention sera mieux comprise à la lecture de la description suivante de plusieurs réalisations préférées d'un système de commutation selon l'invention en référence aux dessins annexés correspondants dans lesquels :

- la Fig. 1 est un bloc−diagramme d'un système de commutation de paquets selon l'invention ;
- la Fig. 2 est un bloc−diagramme d'un circuit d'entrée inclus dans le système de commutation et relié à un multiplex temporel asynchrone de paquets;
- la Fig. 3 montre en détail un circuit de synchronisation inclus dans le circuit d'entrée ;
- la Fig. 4 est un bloc−diagramme d'un circuit d'aiguillage de paquet et de conversion d'étiquette inclus dans le système de commutation ;
- la Fig. 5 est un bloc−diagramme détaillé d'une mémoire−tampon de paquet et d'un circuit d'insertion de paquet de synchronisation inclus dans le système de commutation ;
- la Fig. 6 est un diagramme de paquet pour expliquer la mémorisation de blocs de plusieurs paquets dans la mémoire tampon montrée à la Fig. 5 ;
- la Fig. 7 est un bloc−diagramme d'un circuit de commande de lecture de paquet inclus dans le système de commutation ; et
- la Fig. 8 est un bloc-diagramme de l'un des circuits de calcul d'adresses de blocs de paquet inclus dans le circuit de commande de lecture de paquet montré à la Fig. 7

Dans la description suivante, est traité, à titre d'exemple, la commutation de paquets asynchrones de différentes longueurs provenant de $P = 8$ multiplex entrants E1 à E8 et à transmettre vers $P = 8$ multiplex sortants S1 à S8. Les paquets appartenant à une même communication ont un même largeur, par exemple égale à 8 octets pour une communication de parole, ou égale à 24, 32, 64 ou 128 octets pour une communication d'un autre type. Un multiplex entrant quelconque Ej, ou j est un entier compris entre 1 et $J = 8$, véhicule des paquets valides PQ, c'est-à-dire contenant des informations valides à transmettre, et des paquets vides PV dits également paquets de synchronisation. Un paquet valide PQ transmis dans un multiplex a une longueur en octets multiple de 8 et comprise entre 8 et 128 octets. Dans la suite, la longueur d'un paquet est notée L et est exprimée en nombre de blocs à $I = 8$ octets. Les blocs d'un paquet sont notés BC1 à BC16. Un paquet de synchronisation PV a une longueur L fixe prédéterminée, choisie par exemple égale à 1 bloc. Le premier octet d'un paquet PQ ou PV est une étiquette ET utilisée pour l'identification du paquet. Un paquet PV est constitué d'une étiquette ET égale à "00001111" et de 7 octets consécutifs identiques égaux à "01010101". Un paquet valide d'information PQ a une étiquette ET différente de l'étiquette ET = "0000 1111". Le second octet d'un paquet PQ comprend quatre bits de rangs 0,2,4 et 6 constituant un mot d'indication de longueur IL du paquet.

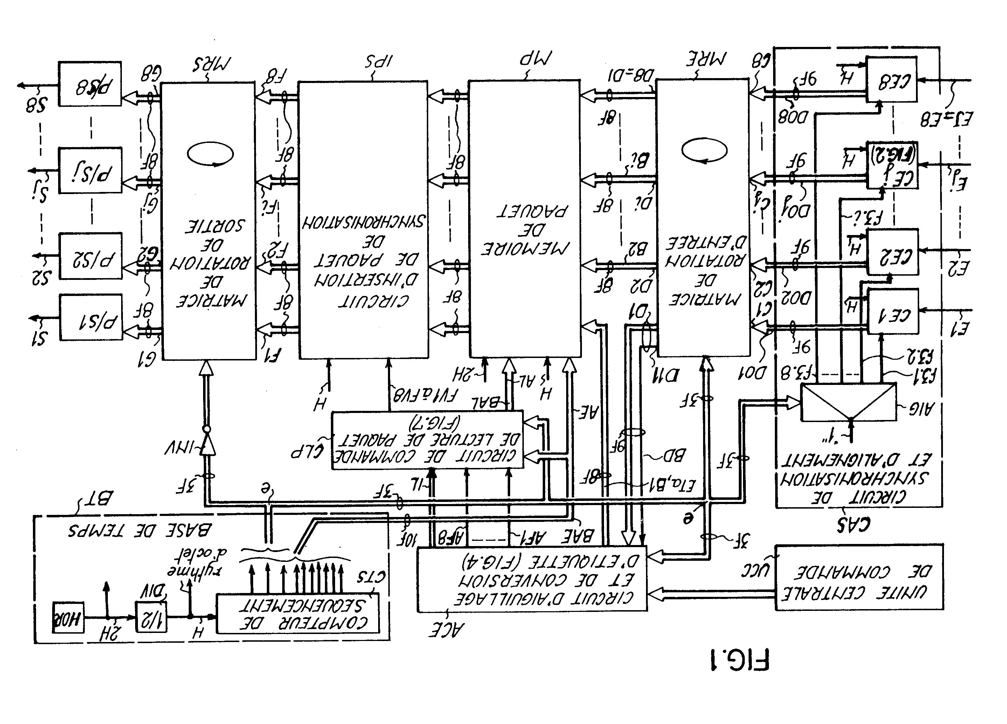

En référence à la Fig. 1, un système de commutation de paquet selon l'invention comprend essentiellement une base de temps BT, un circuit de synchronisation et d'alignement CAS, une matrice de rotation d'entrée MRE, une matrice de rotation de sortie MRS, un circuit d'aiguillage et de conversion d'étiquette ACE, une mémoire tampon de paquet MP, un circuit de commande de lecture de paquet CLP, et un circuit d'insertion de paquet de synchronisation IPS.

La base de temps BT comprend un oscillateur HOR produisant un signal d'horloge 2H de période prédéterminée T/2, un diviseur de fréquence par 2 recevant le signal 2H et délivrant un signal d'horloge H de période égale à T, et un compteur de séquencement CTS.

Le compteur de séquencement CTS est un compteur binaire ayant un nombre d'étages au moins égal à 10. Il reçoit le signal H à une entrée d'horloge.

Trois sorties respectivement de trois étages de poids les plus faibles dans le compteur CTS sont connectées à un bus de séquencement e et délivrent cycliquement des adresses de sélection AS1 à AS8 pendant des intervalles temporels égaux IT1 à IT8 d'une trame de durée égale à 8T. Pendant les intervalles temporels IT1 à IT8, chacun de durée égale à T, sont assurés dans le système de commutation des traitements relatifs à huit octets parallèles dans les $P = 8$ multiplex entrants, E1 à E8, et à huit octets parallèles dans les $P = 8$ multiplex sortants, S1 à S8, respectivement.

Les 10 sorties du compteur CTS sont connectées à un bus d'adresse d'écriture BAE et y délivrent séquentiellement, au rythme de signal d'horloge H, $2^{10} = 1024$ adresses d'écriture, AE = 0 à AE = 1023, de cellules de mémoire composant la mémoire de paquet MP.

Le circuit CAS a essentiellement pour fonction d'aligner les différents blocs de différents paquets PQ transmis en plésiochronisme dans les multiplex entrants E1 à E8 et de les transmettre à la matrice de rotation d'entrée MRE en synchronisme, au rythme du signal d'horloge local H. Une autre fonction du circuit CAS est de signaler le début de chaque paquet PQ transmis à la matrice MRE. Les paquets PV ne sont pas transmis à la matrice MRE.

Le circuit d'alignement et de synchronisation CAS est constitué de 8 circuits d'entrée CE1 à CE8 et d'un aiguilleur-démultiplexeur de commande AIG.

Les multiplex E1 à E8 sont connectés respectivement aux circuits CE1 à CE8 et fournissent bit par bit les paquets asynchrones PQ et PV véhiculés sous forme série.

Dans un circuit d'entrée CEj, les paquets PQ délivrés par le multiplex Ej sont stockés dans une file-tampon avant d'être délivrés via un bus DOj, octet par octet et sous la commande d'un signal d'horloge H, à un port de 9 entrées parallèles Cj de la matrice MRE recevant également pour chaque octet délivré par le circuit CEj un bit à l'état "1" lorsque l'octet est une étiquette ET.

L'aiguilleur-démultiplexeur AIG a une entrée de données câblée à un état logique "1" et 8 sorties reliées respectivement par des fils f3.1 à f3.8 à des entrées de commande et de synchronisation de lecture des circuits CE1 à CE8. Des entrées de sélection de l'aiguilleur AIG sont reliées au bus de séquencement e.

Les circuits d'entrée CE1 à CE8 sont commandés séquentiellement en lecture par l'aiguilleur AIG, à travers les fils f3.1 à f3.8. Un circuit d'entrée CEj délivre au port Cj de la matrice MRE un bloc BC à 8 octets de paquet entre deux activations successives par l'aiguilleur AIG.

Le début de la transmission d'un premier octet d'un bloc BC au port Ci est synchrone à une impulsion à l'état "1" délivré dans le fil f3.j par l'aiguilleur AIG.

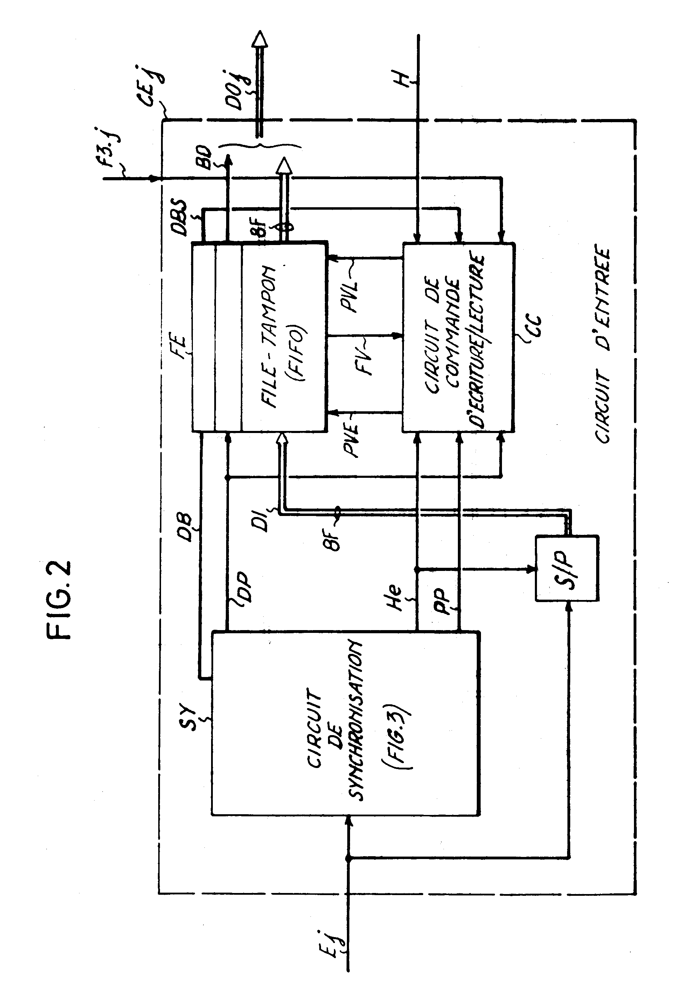

Un circuit d'entrée CEj est montré à la Fig. 2. Un circuit de ce type pour le traitement de paquets de longueur fixe est décrit dans le brevet FR – B – 2538976 en référence à la Fig. 2.

Le circuit d'entrée Cej comprend un convertisseur série – parallèle S/P, un circuit de synchronisation SY, une file tampon FE de type FIFO, et un circuit logique de commande CC.

Le convertisseur série – parallèle S/P est connecté en entrée au multiplex entrant Ej ; il délivre, via un bus à 8 fils DI, des octets de paquet à des entrées parallèles de données de la file FE. Le convertisseur S/P reçoit à une entrée d'horloge un signal de rythme de transmission d'octet He délivré par le circuit SY. Le signal He est plésiochrone au signal d'horloge H.

Des signaux de signalisation DP et PP sont produits dans le circuit SY à partir d'une analyse des paquets convoyés dans le multiplex entrant Ej. Le signal DP indique par un état "1" qu'un octet délivré par le convertisseur S/P est l'étiquette ET d'un paquet PQ en cours de réception. Le signal PP indique par un état "1" que des octets délivrés par le convertisseur S/P sont des octets du paquet valide PQ à stocker dans la file FE. Le signal DP est appliqué à une entrée de données de la file FE; le signal PP est fourni au circuit logique CC. Par ailleurs, un signal DB indiquant par un niveau logique "1" la présence du premier octet d'un bloc de paquet est transmis à une entrée de données supplémentaire de la file FE. L'alignement est effectué sur la présence de ce signal DB et non celle du signal DP comme dans le circuit décrit dans le brevet FR – B – 2538976. Ainsi, la longueur de la file d'alignement est réduite à la largeur du bloc, plus quelques octets, et non à celle du paquet.

La file FE stocke des mots à 10 bits, typiquement 12 mots à 10 bits. Chacun de ces mots à 10 bits est constitué d'un octet de paquet, d'un bit de début de paquet BD à l'état logique du signal DP lors de la réception de l'octet aux entrées de données de la file FE et d'un bit de début de bloc DBS à l'état logique du signal DB et utilisé pour l'alignement. Les mots stockés sont transmis au rythme du signal H dans le bus DOj, sous la commande du circuit CC.

Le circuit logique de commande CC commande l'écriture et la lecture des mots dans la file FE. Le circuit CC reçoit en entrée les signaux He, DP, PP, H, ainsi que l'impulsion de synchronisation délivrée par l'aiguilleur AIG via le fil f3.1, le bit DBS dit "de début de bloc" d'un mot en cours de lecture en sortie de la file d'alignement FE, et un signal FV délivré par la file FE. Le signal FV indique par un état "1" que la file FE est vide. Le circuit CC fournit à la file FE un signal de commande d'écriture PVE et un signal de commande de lecture PVL.

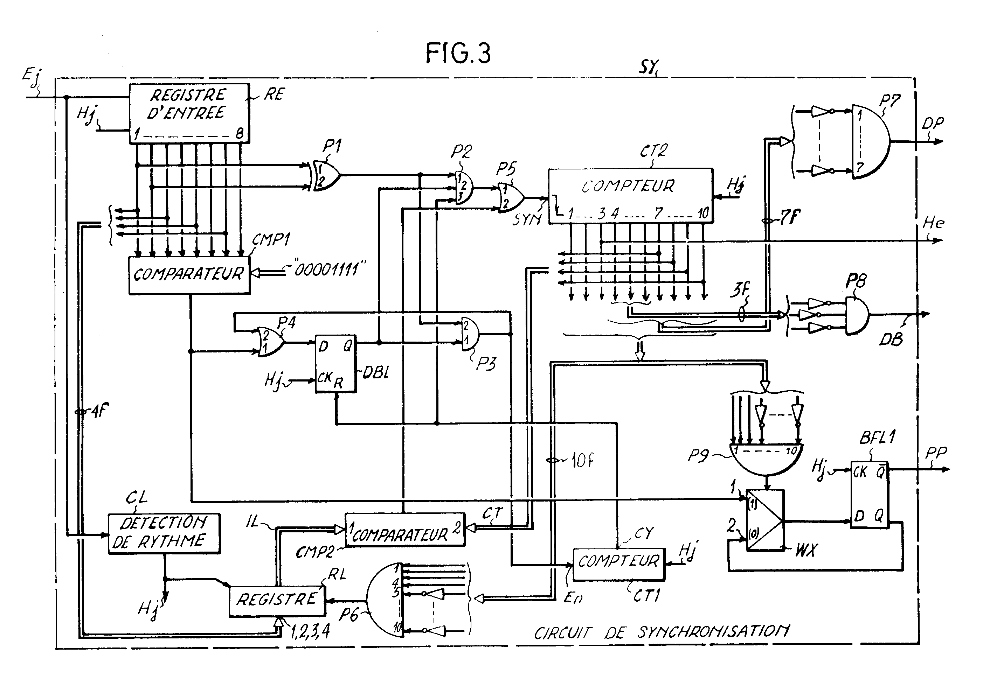

Le circuit de synchronisation SY est montré en détail à la Fig. 3 et décrit ci – après.

Un signal de rythme de transmission de bit Hj est fourni par un circuit de détection de rythme CL connecté en entrée au multiplex Ej. Le signal Hj est appliqué à des entrées d'horloge de bascules de type D DBL et BFL1, de compteurs CT1 et CT2 et de registres RE et RL inclus dans le circuit SY.

Le registre d'entrée RE reçoit à une entrée série de données, des bits de paquet délivrés par le multiplex Ej sous la commande du signal Hj. Huit sorties parallèles 1 à 8, du registre RE sont reliées respectivement à des entrées parallèles correspondantes d'un comparateur de détection d'étiquette de paquet de synchronisation CMP1. La combinaison binaire "00001111" est mémorisée par câblage dans le circuit SY et est appliquée à d'autres entrées parallèles du comparateur CMP1. Le comparateur CMP1 délivre par une sortie un état "1" lorsqu'une étiquette ET = "00001111" est chargée dans le registre RE. La sortie du comparateur CMP1 est reliée à une première entrée d'une porte OU P4 et à une première entrée d'un multiplexeur WX.

Une porte OU – exclusif P1, une porte ET à trois entrées P2, une porte ET à deux entrées P3, la porte OU à deux entrées P4, une bascule de type D DBL, et un compteur binaire modulo 64 CT1, ainsi que le registre RE et le comparateur CMP1 sont utilisés pour détecter les paquets vides de synchronisation PV transmis dans le multiplex Ej et pour synchroniser un compteur de bit modulo 1024 CT2, par initialisation à zéro du compteur CT2 à chaque détection d'un paquet PV.

Les entrées de la porte OU – exclusif P1 sont connectées à des première et seconde sorties, 1 et 2, du registre RE. Une sortie de la porte P1 applique un état "1" à une première entrée de la porte P2 pendant toute la durée de la réception d'un octet "01010101" d'un paquet PV dans le registre RE. Des seconde et troisième entrées de la porte P2 sont reliées respectivement à une sortie Q de la bascule DBL et à une sortie CY du compteur CT1.

La bascule DBL comprend une entrée de donnée D reliée à une sortie de la porte P4, et une entrée de remise à zéro R connectée à la sortie CY du compteur CT1. La sortie Q de la bascule DBL est reliée à une première entrée de la porte P3 ayant une seconde entrée reliée à la sortie de la porte P1. Une sortie de la porte P3 est connectée à une seconde entrée de la porte P4 et à une entrée En du compteur CT1.

Lorsque le comparateur CMP1 détecte une étiquette ET = "00001111", la sortie Q de la bascule DBL passe à l'état "1" au coup d'horloge suivant, puis la sortie de la porte P3 vient à un état "1" lorsque le premier bit à l'état "1" de l'octet "01010101" est délivré par la sortie 1 du registre RE, soit à la réception par le registre RE du bit de rang 9 du paquet PV, en numérotant de 0 à 63 les rangs des 64 bits d'un paquet PV. L'entrée En du compteur CT1 commande l'initialisation et le blocage du comptage à la valeur 9 lorsqu'elle est à l'état "1", et autorise le comptage à partir de cette valeur lorsqu'elle vient à l'état "1". Dans le cas où 7 octets "01010101" succédant à l'étiquette ET = "00001111" sont reçus dans le registre RE, l'entrée En du compteur CT1 reste à l'état "1" pendant toute la durée de leur réception et le compteur CT1 atteint la valeur 63. La sortie CY du compteur CT1 vient à l'état "1" dès que la valeur 63 est atteinte. L'état "1" délivré par la sortie CY est appliqué à la troisième entrée de la porte P2 et à l'entrée R de remise à zéro de la bascule DBL. Une sortie de la porte P2 reliée à une première entrée d'une porte OU à deux entrées P5 vient à l'état "1", et un état "1" est consécutivement appliqué à l'entrée de remise à zéro SYN du compteur CT2 reliée à une sortie de la porte P5. La bascule DBL est initialisée à zéro, après le passage à l'état "1" de l'entrée R, sur un front montant de l'état "0" à l'état "1" du signal de rythme Hj indiquant le chargement dans le registre RE du bit de rang 0 d'un paquet succédant à un paquet de synchronisation PV. La sortie de la porte P5 passe de l'état "1" à l'état "0" et produit donc un front descendant appliqué à l'entrée SYN du compteur CT2. Ce front descendant commande l'initialisation à zéro du compteur CT2 afin de synchroniser le début de son comptage sur la réception du bit de rang 0 du paquet succédant au paquet PV.

Le compteur CT2 a la capacité nécessaire pour assurer le comptage des 1024 bits d'un paquet PQ de longueur maximale L = 16 blocs. Les 1024 bits d'un paquet PQ de longueur maximale L = 16 blocs sont numérotés de 0 à 1023.

Le compteur CT2 est initialisé à zéro à la fin de la réception d'un paquet de synchronisation PV. Il doit également être initialisé à zéro lors de la réception du dernier bit d'un paquet PQ.

Le circuit de synchronisation SY comprend un registre à entrées et sorties parallèles RL et un comparateur de mots CMP2 pour respectivemnt mémoriser le mot d'indication de longueur IL contenu dans le second octet du paquet PQ et détecter la réception du dernier bit du paquet PQ à la suite d'une comparaison entre la valeur fournie par le compteur CT2 et le mot IL mémorisé.

Une porte logique P6 à 10 entrées, 1 à 10, reliées respectivement à 10 sorties, 1 à 10, du compteur CT2 délivre un état "1" à une entrée de commande de chargement du registre RL lorsque le compteur CT2 délivre la valeur 15, c'est-à-dire lorsque le second octet du paquet PQ est entièrement chargé dans le registre RE. La porte logique P6 est une porte ET ayant des entrées 1 à 4 directement reliées aux sorties 1 à 4 de poids faible du compteur CT2, et des sorties 5 à 10 reliées à travers des inverseurs aux entrées 5 à 10 poids fort du compteur CT2.

Quatre entrées parallèles de données 1, 2, 3 et 4 du registre RL sont connectées aux sorties 1, 3, 5 et 7 du registre d'entrée RE et reçoivent respectivement les bits de rangs 0, 2, 4 et 6 dans le second octet chargé dans le registre RE. Les bits de rangs 0, 2, 4 et 6 constituent le mot d'indication de longueur IL du paquet PQ. Le mot IL est chargé dans le registre RL sous la commande de la porte P6, et est appliqué à des premières entrées parallèles du comparateur CMP2. Sachant que la longueur en octets des paquets est multiple de huit, un mot CT composé de quatre bits de poids les plus forts délivrés par le compteur CT2 est appliqué à des secondes entrées parallèles du comparateur CMP2. Lorsque les mots IL et CT ont une même valeur, une sortie du comparateur CMP2 reliée à une seconde entrée de la porte P5 fournit un état "1".

Le mot IL prend des valeurs binaires de "0000" à "1111" respectivement pour des longueurs de paquets PQ de 1 bloc de 8 octets, soit $2^6$ = 64 bits, à 16 blocs de 8 octets, soit $2^{10}$ = 1024 bits. Le mot CT indique le nombre de blocs reçus. Le mot CT prend respectivement les valeurs binaires de "0000" à "1111" pendant respectivement la réception des blocs BC1 à BC16 d'un paquet PQ de longueur maximale L = 16 blocs.

Le compteur CT2 est initialisé à zéro au basculement de la sortie du comparateur CMP2 de l'état "1" à l'état "0". Soit, par exemple, la réception en cours d'un paquet PQ de longueur L = 2 blocs, le mot IL appliqué aux premières entrées du comparateur CMP2 a la valeur "0001". A la réception du premier bit du bloc BC2 du paquet PQ, le mot CT délivré par le compteur CT2, ayant précédemment la valeur "0000", prend la valeur "0001" et le comparateur CMP2 applique à travers la porte P5 un état "1" à l'entrée SYN du compteur CT2. Lors de la réception d'un premier bit d'un paquet succédant au bloc BC2, le mot CT prend la valeur "0010", la sortie du comparateur CMP2 commute de l'état "1" à l'état "0", et un front descendant est ainsi appliqué à l'entrée SYN du compteur CT2 ce qui a pour effet d'initialiser à zéro le compteur CT2.

Une porte ET P7 a des entrées 1 à 7 qui sont respectivement reliées à travers des inverseurs aux sorties 4 à 10 du compteur CT2 pour produire le signal de début de paquet DP. Le signal DP est à l'état "1" pendant la réception des bits 0 à 7 d'un paquet, soit pendant la réception de l'étiquette du paquet.

Le signal de rythme d'octet He est délivré par la sortie 3 du compteur CT2.

Par ailleurs, une porte ET P8 a des entrées 1 à 3 qui sont respectivement reliées à travers des inverseurs aux sorties 4 à 6 du compteur CT2 pour produire le signal DB de début de bloc.

Le multiplexeur WX, la bascule BFL1 de type D, et une porte P9 à 10 entrées sont prévus afin de produire le signal de présence de paquet PP.

Les entrées 1 à 3 de la porte P9 sont reliées directement aux sorties 1 à 3 du compteur CT2, respectivement. Les sorties 4 à 10 de la porte P9 sont reliées à travers des inverseurs respective‐ment aux sorties 4 à 10 du compteur CT2. La sortie de la porte P9 applique un état "1" à une entrée de commande de sélection du multiplexeur WX lorsque le compteur CT2 délivre la valeur "1110000000" à la réception du bit de rang 7 d'un paquet en cours de réception. Cet état "1" com‐mande, dans le multiplexeur WX, la connexion d'une première entrée reliée à une sortie du com‐parateur CMP1, à une sortie reliée à une entrée D de la bascule BFL1. Dans le cas où le comparateur CMP1 détecte une étiquette ET = "00001111" d'un paquet vide PV, un état "1" est écrit dans la bascule BFL1, sous la commande du signal Hj. Dans le cas contraire, un état "0" est écrit dans la bascule BFL1 grâce à une sortie directe Q de celle‐ci reliée à une seconde entrée du multi‐plexeur WX. La seconde entrée du multiplexeur WX est sélectionnée lorsque la porte P9 fournit un état "0"; l'entrée D de la bascule BFL1 est alors bouclée sur la sortie Q. L'état "1" ou "0" écrit dans la bascule BFL1 à la réception d'une étiquette d'un paquet est mémorisée dans la bascule BFL1 jus‐qu'à la réception de l'étiquette d'un paquet suivant. Une sortie inverse $\overline{Q}$ de la bascule BFL1 délivre l'état inverse à celui écrit dans la bascule BFL1 afin de produire le signal PP.

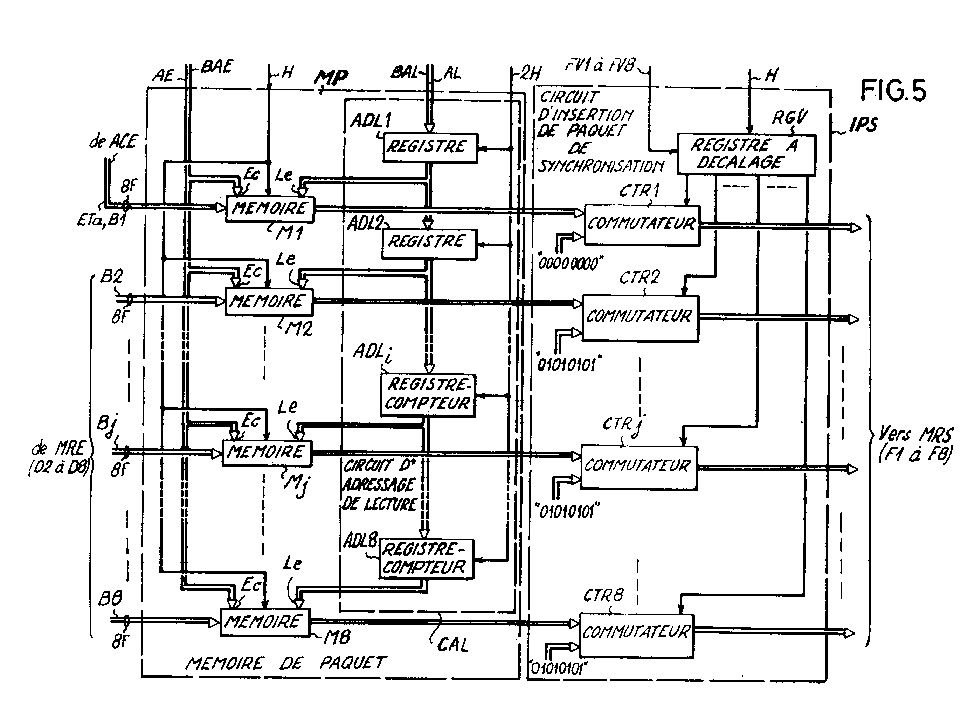

En référence à la Fig. 1, l'aiguilleur‐démulti‐plexeur AIG du circuit CAS commande séquen‐tiellement les circuits CE1 à CE8 de telle manière que si le premier octet d'un bloc BC est délivré par le circuit d'entrée CEj au temps $t_o$, pendant l'inter‐valle temporel ITj, le circuit CE(j + 1) délivre le premier octet d'un autre bloc BC au temps $t_o + T$. La transmission des blocs par les circuits CE1 à CE8, respectivement aux ports C1 à C8 de la matrice MRE, est assurée de manière oblique dans le temps. Le brevet FR‐B‐2538976 décrit en référence à la Fig. 5 ce type de transmission destiné à éviter que deux ou plusieurs étiquettes de paquets soient délivrées simultanément par deux ou plusieurs circuits d'entrée CE aux portes C de la matrice MRE.

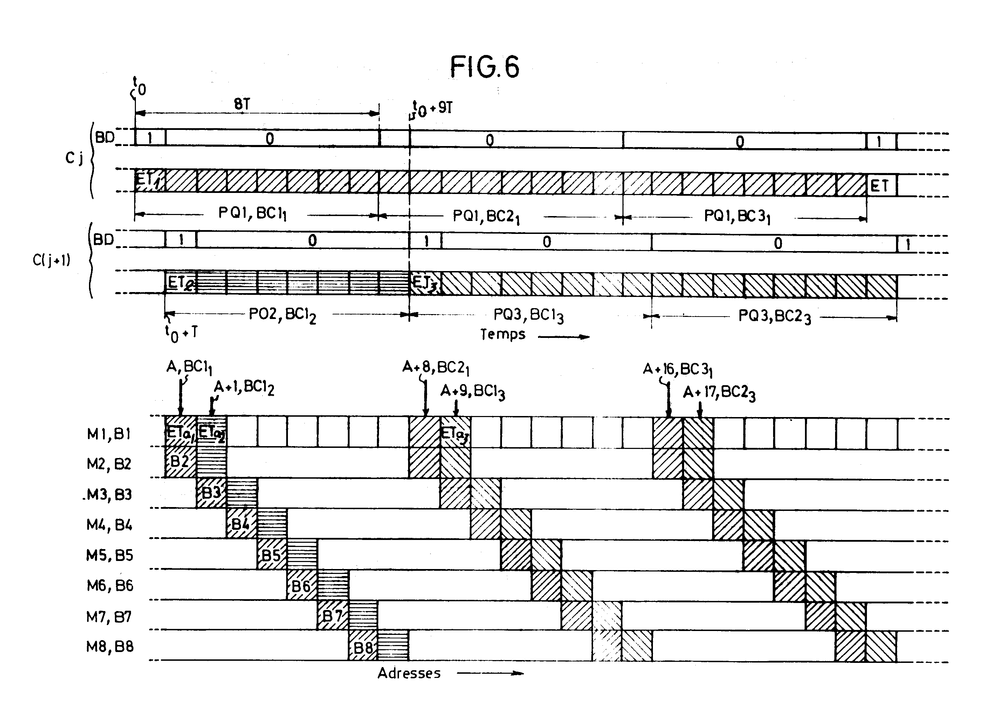

Les matrices MRE et MRS sont analogues. La matrice MRE réalise une conversion "parallèle‐diagonale" dite "paragonale", telle que décrite dans le brevet FR‐B‐2538976 en référence aux Figs. 5 et 6, en effectuant sous la commande de la base de temps BT, reliée à la matrice MRE par le bus e, un cycle de 0 à 7 permutations sur les octets et bits de début de paquet BD fournis à la matrice MRE respectivement pendant les interval‐les temporels IT1 à IT8 assignés aux multiplex entrants E1 à E8.

Un bloc de paquet BC ayant 8 octets, notés B1 à B8, est fourni par des ports de sortie D1 à D8 de la matrice MRE sous la forme diagonale de telle sorte que si l'octet B1 est fourni par le port D1 au temps $t_o$, les octets B2, B3, ... B8 sont fouris par les ports D2, D3, ... D8 aux temps $t_o + T$, $t_o + 2T$, ... $t_o + 7T$.

La matrice MRS realise sur les blocs de pa‐quets, après le traitement de commutation dans la mémoire MP, une conversion "diagonale‐paral‐lèle" afin de délivrer les paquets sortant de la matrice MRS selon une configuration analogue à celle des paquets entrant dans la matrice MRE. Des entrées de commande de permutation de la matrice MRS sont reliées au bus e à travers un circuit inverseur INV afin de commander dans la matrice MRS le cycle de 0 à 7 permutations dans un ordre inverse à celui effectué dans la matrice MRE. Des ports d'entrée F1 à F8 de la matrice MRS reçoivent des octets de paquets issus de la mémoire de paquets MP et du circuit d'insertions de paquet de synchronisation IPS. Les octets de paquets sont fournis par la matrice MRS via des ports de sortie, G1 à G8, à des convertisseurs parallèle‐série, P/S1 à P/S8, qui les transmettent bit par bit dans les multiplex sortants S1 à S8.

A la suite des permutations effectuées dans la matrice MRE, toutes les étiquettes ET de paquets PQ sont délivrées par le port D1 de la matrice MRE ainsi que des octets B1 ≠ ET de blocs de paquets. Le port D1 est constitué de 9 sorties parallèles. Une première sortie D11 du port D1 délivre les bits BD associés aux étiquettes ET et octets B1 ≠ ET qui eux sont délivrés par les 8 sorties restantes du port D1. Le port D1 est relié par un bus à 9 fils au circuit d'aiguillage et de conversion d'étiquette ACE. Les ports D2 à D8 appliquent par des bus respectifs à 8 fils, les octets B1 à B8 de blocs de paquet à 8 ports à 8 entrées parallèles de donnée de la mémoire de paquet MP.

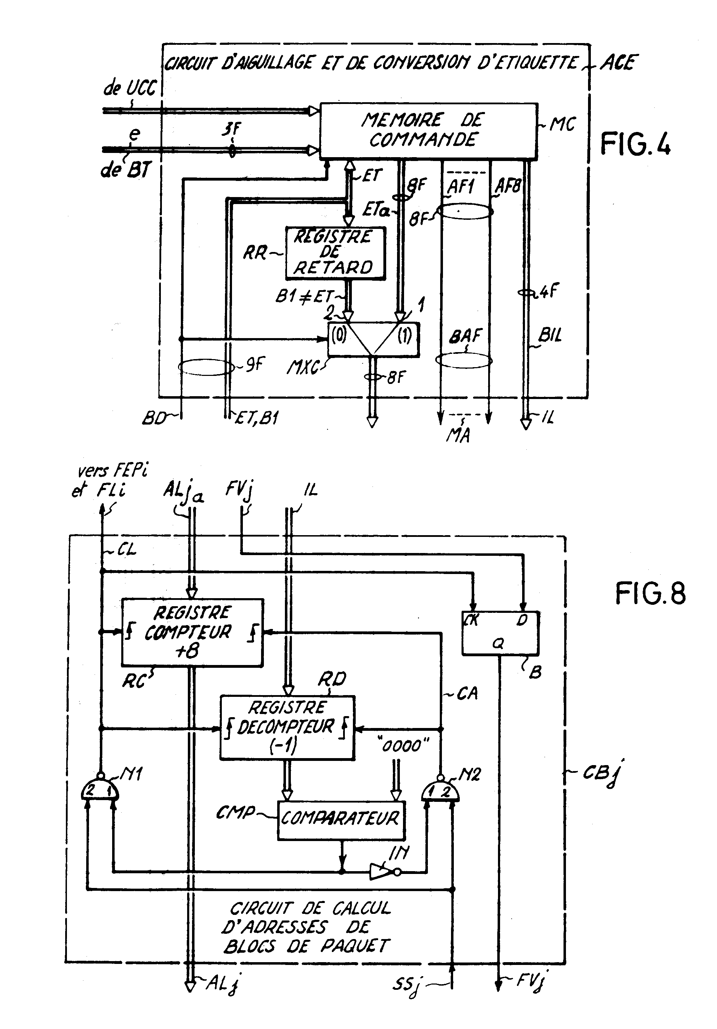

Le circuit ACE est montré à la Fig. 4. Il com‐prend une mémoire de commande MC, un multi‐plexeur MXC, et un registre de retard RR.

La mémoire de commande MC contient des informations nécessaires au traitement de com‐mutation de paquets réalisé par le système. Ces informations sont écrites par une unité centrale de commande UCC dans des cellules de mémoire de la mémoire MC. Ces écritures dépendent de paquets dits de signalisation détectés par l'unité UCC avant tout établissement de communications dans les multiplex entrants E1 à E8 et repérés par des bits spécifiques dans les étiquettes de ces blocs de signalisation. Les écritures et lectures d'information dans la mémoire MC sont synchronisées par le signal de rythme d'octet H fourni par la base de temps BT.

Les cellules de la mémoire MC ont pour adresses des étiquettes ET. Une cellule de mémoire MC d'adresse ET mémorise une nouvelle étiquette, ETa, attribuée à un paquet entrant PQ d'étiquette ET, un mot d'aiguillage MA à 8 bits, et le mot d'indication de longueur IL du paquet PQ.

Lorsqu'un bit BD = "1" est fourni par la matrice MRE à une entrée de commande de lecture de la mémoire MC et à une entrée de sélection du multiplexeur MXC, l'octet B1 délivré à cet instant par la matrice MRE est une étiquette ET. Cette étiquette ET est appliquée à des entrées parallèles d'adresse de la mémoire MC et la mémoire MC fournit en réponse la nouvelle étiquette Eta correspondante, ainsi que le mot d'aiguillage MA et le mot d'indication de longueur IL. L'étiquette ETa est appliquée à des premières entrées parallèles du multiplexeur MXC qui la fournit à un premier port d'entrée de donnée de la mémoire de paquet MP pour y être mémorisée avant la succession des octets B2 à B8 du premier bloc BC1 du paquet PQ. Le mot MA et le mot IL sont délivrés par la mémoire MC respectivement dans un bus de mot d'aiguillage BAF à 8 fils, AF1 à AF8, et un bus de mot d'indication de longueur BIL à 4 fils.

Lorsque le bit BD est à l'état "0", l'octet B1 fourni par la matrice MRE n'est pas une étiquette ET à convertir. La mémoire MC n'est pas commandée en lecture, et l'octet $B1 \neq ET$ est délivré au premier port d'entrée de données de la mémoire MP, à travers le registre de retard RR et des secondes entrées du multiplexeur MXC, pour y être mémorisé avant la succession des octets B2 à B8 d'un bloc BC entrant différent d'un premier bloc de paquet BC1 incluant une étiquette ET. Le registre RR a pour fonction d'introduire un retard correspondant à un temps de lecture de la mémoire MC afin de positionner temporellement, de la même manière que l'est une étiquette ETa le transfert de l'octet $B1 \neq ET$ du multiplexeur MXL à la mémoire MP, par rapport aux transferts des octets B2 à B8 de la matrice MRE vers la mémoire MP. Comme on le verra dans la suite, en référence à la Fig. 6, le retard introduit par le registre RR ou par la traduction d'étiquette implique la mémorisation simultanée des deux premiers octets B1 et B2 d'un bloc. La mémoire MP comprend I = 8 sous-mémoires M1 à M8 et un circuit d'adressage de lecture CAL.

Les sous-mémoires M1 à M8 sont des mémoires de type à accès aléatoire (RAM) ayant une même capacité. En supposant, dans le cas le plus défavorable, que la mémoire MP doit mémoriser au moins J = 8 paquets provenant respectivement des multiplex E1 à E8 ayant une largeur maximale de 16 blocs à I = 8 octets, chancune des sous-mémoires a une capacité minimale égale à I x 16 = 128 octets. Cependant, une capacité de sous-mémoire peut être prévue beaucoup plus grande dans la mesure où un paquet entrant doit être diffusé vers un grand nombre de multiplex sortant au maximum égal à huit, ce qui impose une durée de mémorisation relativement longue afin de ne point perdre d'information.

Des entrées parallèles d'adresse d'écriture Ec des sous-mémoires M1 à M8 sont toutes reliées au bus d'adresse d'écriture BAE ayant au moins $\log_2 2^{10} = \log_2 1024 = 10$ fils.

Le bus BAE relie les entrées parallèles d'adresse Ec aux 10 sorties du compteur de séquencement CTS de la base de temps BT. Les sous-mémoires M1 à M8 sont adressées parallèlement en écriture par le compteur CTS. Des entrées parallèles de données de la sous-mémoire M1 reçoivent les étiquettes ETa et les octets $B1 \neq ET$ délivrés par le circuit d'aiguillage et de conversion d'étiquette ACE. Des entrées parallèles de données des sous-mémoires M2 à M8 reçoivent respectivement les octets B2 à B8 fournis par les ports de sortie D2 à D8 de la matrice MRE.

Un cycle d'écriture dans la mémoire MP de 3 paquets PQ1 et PQ2, PQ3 délivrés par deux circuits d'entrée CEj et CE(j + 1) aux ports d'entrées Cj et C(j + 1) de la matrice MRE est montré en exemple à la Fig. 6.

Comme montré en haut de la Fig. 6, le paquet PQ1 délivré par le circuit CEj est composé de 3 blocs $BC1_1$, $BC2_1$ et $BC3_1$. Les paquets PQ2 et PQ3 sont délivrés successivement par le circuit CE(j + 1); ils sont composés respectivement de 1 bloc $BC1_2$ et de 2 blocs $BC1_3$ et $BC2_3$.

Le paquet PQ1 a une étiquette $ET_1$ fournie par le circuit CEj à un temps $t_0$, pendant un intervalle temporel $ITj$. Lorsque l'étiquette $ET_1$ est appliquée au port d'entrée C1 de la matrice MRE, le bit BD correspondant est à l'état "1". L'étiquette $ET_2$ du paquet PQ2 est fournie par le circuit CE(j + 1) au temps $t_0 + T$ ; l'étiquette $ET_3$ du paquet PQ3 est fournie par le circuit CE(j + 1) au temps $t_0 + 9T$.

Une étiquette ETa ou un octet $B1 \neq ETa$ est appliquée par le circuit d'aiguillage et de conversion d'étiquette ACE aux entrées parallèles de données de la sous-mémoire M1 parallèlement à l'application par la matrice MRE d'un octet B2 aux entrées parallèles de données de la sous-mémoire M2. Il s'ensuit qu'une étiquette ETa, ou un octet B1 ≠ ET, et un octet B2 d'un même bloc de paquet sont écrits dans des cellules de même adresse AE des sous−mémoires M1 et M2.

En bas de la Fig. 6 est montré la localisation des paquets PQ1 à PQ3 dans la mémoire MP.

L'étiquette $ETa_1$ délivrée par le circuit ACE et correspondant à l'étiquette $ET_1$ du paquet PQ1 est mémorisée dans la cellule d'adresse A de la sous−mémoire M1. Les octets B2 à B8 du bloc $BC1_1$ sont mémorisé respectivement dans des cellules d'adresses A à A + 6 des sous−mémoires M2 à M8. Le paquet PQ2 composé d'un unique bloc $BC1_2$ est mémorisé dans des cellules d'adresses A + 1, A + 1 à A + 7 des sous−mémoires M1, M2 à M8. Le second bloc $BC2_1$ du paquet $PQ_1$ est mémorisé dans les cellules d'adresses A + 8, A + 8 à A + 14 des sous−mémoires M1, M2 à M8. Les troisième bloc $BC3_1$ du paquet PQ1 est mémorisé dans les cellules d'adresses A + 16, A + 16 à A + 22 des sous−mémoires M1, M2 à M8. Les premier et second bloc $BC1_3$ et $BC2_3$ du paquet PQ3 sont mémorisé dans des cellules d'adresses A + 9, A + 9 à A + 15 et A + 17, A + 17 à A +23 des sous−mémoires M1, M2 à M8.

De manière générale, un octet Bi d'un bloc BC(k + 1) dont la réception dans la matrice MRE succède à celle d'un bloc BCk d'un même paquet PQ, k étant un entier compris entre 1 à 8, est écrit dans une cellule de la sous−mémoire Mi d'adresse Aa = Ab + 8, où Ab est l'adresse de la cellule de la sous−mémoire Mi dans laquelle est mémorisé l'octet Bi du bloc BCk. Les cellules d'adresses comprises entre Ab à Aa de la sous−mémoire Mi mémorisent des octets Bi de paquets délivrés par les 7 circuits d'entrée CE autres que celui délivrant le paquet PQ.

En référence à la Fig. 5, le signal d'horloge H est appliqué à des entrées de commande d'écriture/lecture E/L des sous−mémoires M1 à M8 et commande l'écriture dans les sous−mémoires M1 à M8 d'octets de paquets pendant des premières demi−périodes et leur lecture pendant des secondes demi−périodes.

Le circuit d'adressage de lecture CAL comprend 2 registres ADL1 et ADL2 et 6 registres−compteurs ADL3 à ADL8 respectivement associées aux sous−mémoires M1 et M2 et M3 à M8.

Le circuit CAL a pour fonction d'assurer un adressage de lecture en diagonale des sous−mémoires M1 à M8. A cette fin, le circuit CAL incrémente successivement, au rythme du signal H, une adresse de lecture AL délivrée par le circuit de commande de lecture de paquet CLP (Fig. 1) afin d'en déduire des adresses AL + 1 à AL + 6 des cellules des sous−mémoires M3 à M8 contenant les octets B3 à B8 d'un bloc BC à transférer vers la matrice de sortie MRS.

Des adresses de lecture AL sont délivrées par le circuit CLP via un bus d'adresse de lecture BAL à des entrées parallèles du registre ADL1. Les registres ADL1, ADL2 et les registres−compteurs ADL3 à ADL8 sont connectés en cascade et sont tous commandés par le signal d'horloge 2H. Des sorties parallèles des registres ADL1, ADL2 et des registres−compteurs ADL3 à ADL8 sont reliées à des entrées parallèles d'adresse de lecture Le des mémoires M1, M2 et M3 à M8 respectivement.

Si une adresse AL est appliquée aux entrées d'adresse Le de la mémoire M1 à un temps $t_o$, les adresses AL, AL + 1,...AL + (i − 2),...AL + 6 sont appliquées aux entrées Le des sous−mémoires M2, M3, ...Mi,...M8 au temps $t_o$ + T, $t_o$ + 2T, ...$t_o$ + (i − 1)T,...$t_o$ + 7T.

Les registres ADL1, ADL2 et les registres−compteurs ADL3 à ADL8 réalisent chacun deux opérations pendant un intervalle temporel IT. Pendant une première moitié d'un intervalle temporel IT, lors d'une écriture des sous−mémoires M1 à M8, chacun des registres ADL1, ADL2 et des registres−compteurs ADL3 à ADL8 charge l'adresse présente à ses entrées. Pendant une seconde moitié de l'intervalle IT, lors d'une lecture des sous−mémoires M1 à M8, chacun des registres ADL1 et ADL2 délivre l'adresse chargée précédemment, et chacun des registres−compteurs ADL3 à ADL8 incrémente chacun d'une unité l'adresse chargée avant de la délivrer.

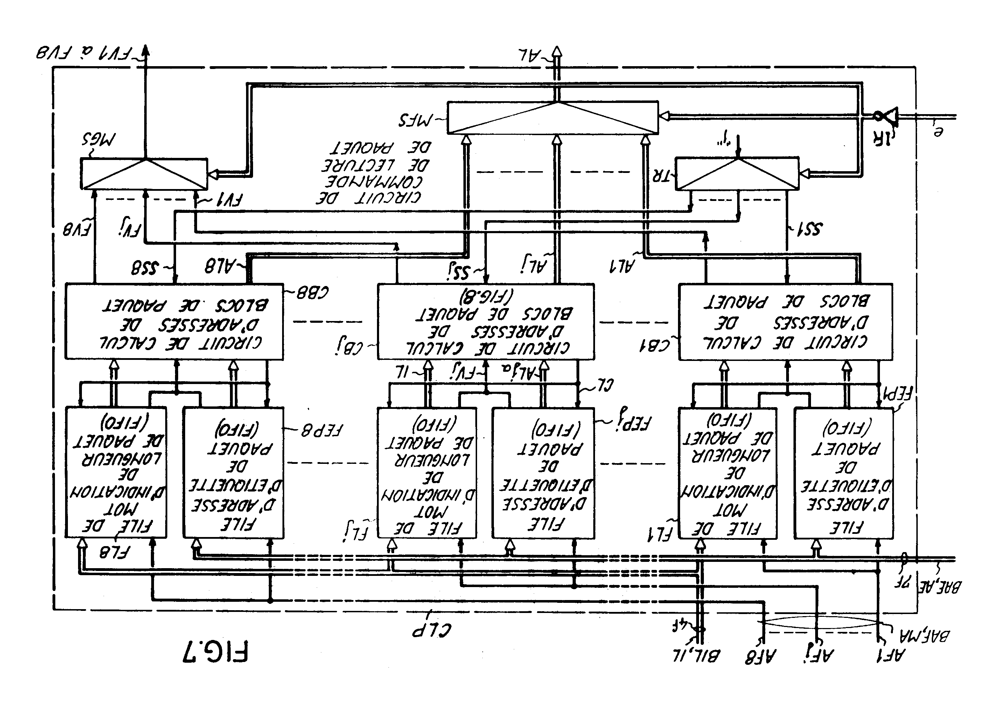

En référence à la Fig. 7, le circuit de commande de lecture de paquet CLP comprend 8 files d'adresses d'étiquettes de paquet FEP1 à FEP8 auxquelles sont associées respectivement 8 files de mot d'indication de longueur de paquet FL1 à FL8 et 8 circuits de calcul d'adresses de blocs de paquet CB1 à CB8, un démultiplexeur TR, et 2 multiplexeurs MFS et MGS.

Des entrées parallèles de sélection du démultiplexeur TR et des multiplexeurs MFS et MGS reçoivent à travers un inverseur IR les adresses de multiplex sortant AS1 à AS8 convoyées par le bus de séquencement e.

Le démultiplexeur TR est analogue à celui AIG du circuit de synchronisation et d'alignement CAS; il invite cycliquement, pendant les intervalles temporels IT1 à IT8, les circuits de calcul CB8 à CB1 à transmettre des adresses de lecture AL8 à AL1 de cellules de la sous−mémoire M1.

Le multiplexeur MFS comprend 8 ports d'entrée recevant respectivement les 8 adresses de lecture AL1 à AL8 délivrées par les circuits CB1 à CB8. Un port de sortie délivre l'adresse AL destinée à la mémoire MP et égale pendant les intervalles temporels IT1 à IT8 respectivement aux adresses AL8 à AL1 dans la sous−mémoire M1 de 8 premiers octets de blocs de paquets à transmettre respectivement dans les multiplex sortants S8 à S1.

Le multiplexeur MGS délivre cycliquement bis bits d'indication de files vides FV1 à FV8, relatifs respectivement aux files FEP1 et FL1 à FEP8 et FL8, au circuit d'insertion de paquet de synchro - nisation IPS montré à la Fig. 5. Le circuit IPS comprend un registre à décalage RGV recevant le signal H par une entrée d'horloge, et les bits FV1 à FV8 délivrés en série par le multiplexeur MGS à une entrée de données, et 8 commutateurs d'octet CTR1 à CTR8 commandés respectivement par 8 sorties du registre à décalage RGV. Lorsque le circuit IPS reçoit un bit FVi = "1", les files FEPi et FLi sont vides et un intervalle de temps est dispo - nible dans le multiplex sortant Si pour la transmis - sion d'un paquet de synchronisation PV. Le circuit IPS délivre alors en diagonale, un paquet de synchronisation à la matrice de rotation de sortie MRS.

Pour plus de précisions sur la structure et le fonctionnement du circuit IPS, le lecteur se repor - tera au brevet FR − B − 2538976 qui décrit en dé - tail, en référence aux Figs. 8, 9 et 10, un circuit d'insertion de paquet de synchronisation analogue au circuit IPS et comprenant un registre à décalage et 16 commutateurs d'octet.

Les files FEP1 à FEP8 et FL1 à FL8 sont du type FIFO (First In, First Out). Les files FEP1 à FEP8 ont leurs entrées parallèles de données connectées au bus BAE pour recevoir les adresses d'écriture AE délivrées par la base de temps BT. Les files FL1 à FL8 ont toutes leurs entrées paral - lèles de données connectées au bus BIL pour recevoir les mots d'indication de longueur IL déli - vrés par le circuit d'aiguillage et de conversion d'étiquette ACE. Des entrées de commande d'écriture des files FEP1 et FL1 à FEP8 à FL8 sont reliées respectivement aux fils AF1 à AF8 du bus de mot d'aiguillage BAF.

Lorsqu'un paquet entrant PQ est à aiguiller vers un multiplex sortant Sj, l'étiquette ET du pa - quet PQ adresse la mémoire de commande MC et celle − ci délivre la nouvelle étiquette ETa du pa - quet PQ, le mot IL et, un mot d'aiguillage MA qui active à l'état "1" le fil AFj du bus BAF. L'étiquette ETa du paquet PQ est écrite dans la sous − mé − moire M1 à l'adresse AE délivrée alors par la base de temps BT. Cette adresse AE et le mot d'indi − cation de longueur IL correspondant au paquet PQ sont écrits respectivement dans les files FEPj et FLj du fait de l'activation à l'état "1" du fil AFj. Les files FEPj et FLj mémorisent, par ordre chronolo − gique d'arrivée, les adresses AE de cellules dans la sous − mémoire M1 mémorisant des étiquettes ETa de paquets à transmettre dans le multiplex sortant Sj et les mots d'indication de longueur de paquet IL correspondants.

Il est à noter que deux fils ou plus parmi les huit fils d'adressage d'écriture AF1 à AF8 des files peuvent être simultanément à l'état "1" lorsqu'un paquet est à diffuser vers deux ou plus multiplex sortants pour une communication multipoint.

Le circuit de calcul d'adresses de blocs de paquet CBj est représenté en détail à la Fig. 8.

Le circuit CBj comprend essentiellement un registre − compteur RC, un registre − décompteur RD, un comparateur de mots CMP, et une bascule B.

Les registre − compteur RC et registre − dé − compteur RD reçoivent à leurs entrées parallèles de données respectivement une adresse de lecture $ALj_a$ et un mot d'indication de longueur IL délivrés par les files FEPj et FLj. L'adresse $Alj_a$ et le mot IL sont chargés respectivement dans les registre − compteur RC et registre − décompteur RD lors − qu'un front montant, de l'état "0" à l'état "1", est délivré dans un fil de commande de lecture CL par une porte NAND à deux entrées N1. Le fil CL relie une sortie de la porte N1 à des entrées de com − mande de chargement des registre − compteur RC et registre − décompteur RD, et à des entrées de commande de lecture des files FEPj et FLj (Fig. 7).

Le registre − compteur RC incrémente de 8 unités l'adresse $Alj_a$ chargée, à chaque fois qu'un front montant est délivré dans un fil de commande de calcul CA par une porte NAND à deux entrées N2. Le fil CA relie une sortie de la porte N2 à une entrée de commande d'incrémentation du registre − compteur RC et à une entrée de com − mande de décrémentation du registre − décompteur RD.

Le registre − décompteur RD décrémente d'une unité le mot d'indication de longueur IL chargé à chaque fois qu'un front montant est fourni par la porte N2. Lorsque le mot IL atteint la valeur "0000", le comparateur de mots CMP fournit en sortie un état "1".

Le comparateur CMP a des premières entrées parallèles reliées à des sorties parallèles du registre − décompteur RD et des secondes entrées parallèles recevant la combinaison binaire "0000" mémorisée par cablâge. Une sortie du comparateur CMP est reliée directement à une première entrée de la porte N1 et à travers un inverseur IN à une première entrée de la porte N2. Des secondes entrées des portes N1 et N2 reçoivent le signal de sélection SSj fourni par le démultiplexeur TR (Fig. 7).

Le signal de sélection SSj est à l'état "1" pendant l'intervalle temporel ITj, lorsque le bus e délivre l'adresse ASj du multiplex Sj aux entrées de sélection du démultiplexeur TR.

Le registre − compteur RC délivre par des sorties parallèles l'adresse de cellule ALj appliquée au port d'entrée correspondant du multiplexeur MFS. Dans le cas où l'adresse $ALj_a$ est chargée dans le registre RC au temps $t_o$, l'adresse ALj prend successivement pendant des intervalles temporels ITj, les valeurs $ALj_a$, $ALj_a + 8,...ALj_a + (\ell - 1).8,...ALj_a + (L - 1).8$ respectivement aux temps $t_o$, $t_o + 8T,...t_o + (\ell - 1).T,...t_o + (L - 1).T$, $\ell$ étant un entier compris entre 1 et L. Les adresses dans la sous−mémoire M1 des L premiers octets respectivement de L blocs d'un paquet à transmettre dans le multiplex sortant Sj sont donc fournies à la mémoire MP.

La bascule B prend en compte l'état du bit FVj fourni par les files FEPj et FLj et le transfère au multiplexeur MGS après la transmission à la mémoire MP, via le multiplexeur MFS, d'une dernière adresse $ALj = ALj_a + (L - 1).8$ délivrée par le registre−compteur RC. En effet, la bascule B a une entrée de donnée D recevant le bit FVj délivré par les files FEPj et FLj et une entrée d'horloge reliée au fil CL. Une sortie Q de la bascule B fournit le bit FVj à une entrée correspondant du multiplexeur MGS.

## Revendications

1. Système pour commuter des paquets (PQ) provenant d'une pluralité de multiplex temporels entrants (E1 à E8) vers une pluralité de multiplex temporels sortants (S1 à S8), chaque paquet (PQ), ayant un en−tête comprenant une étiquette (ET),

    ledit système comprenant

    plusieurs moyens d'entrée (CE1 à CE8) associés respectivement aux multiplex entrants (E1 à E8) pour détecter les paquets (PQ) dans les multiplex entrants et les transmettre en synchronisme,

    des moyens (MRE) reliés aux moyens d'entrée (E1 à E8) pour multiplexer les paquets détectés,

    des moyens (MC) pour convertir les étiquettes (ET) des paquets multiplexés bloc par bloc en des étiquettes converties (ETa),

    une mémoire tampon (MP) où sont stockés temporairement les paquets multiplexés (PQ) avec les étiquettes converties (ETa),

    des moyens (BT) d'adressage en écriture pour produire cycliquement des adresses (AE) de cellules de la mémoire tampon (MP),

    des moyens d'adressage en lecture (FEP1 à FEP8) associés respectivement aux multiplex sortants (S1 à S8) pour mémoriser des adresses (AL) de cellules de la mémoire tampon contenant des paquets écrits (PQ) afin de lire et multiplexer les paquets en fonction des multiplex sortants auxquels ils sont destinés, et

    des moyens (MRS) pour démultiplexer les paquets lus dans la mémoire tampon (MP) et les transmettre dans les multiplex sortants (S1 à S8),

    caractérisé en ce que

    chaque paquet (PQ) est composé d'un nombre variable (L) de blocs de mots (BC), chacun des blocs contenant des mots (B1 à B8) en nombre constant, l'en−tête d'un paquet étant contenu dans un en−tête d'un premier bloc (BC1) du paquet qui comprend deux mots dont le premier est l'étiquette (ET) du paquet et le second est une indication de longueur (IL), et

    les moyens d'entrée (CE2 à CE8) transmettent en synchronisme bloc par bloc les paquets détectés afin que les moyens pour multiplexer (MRE) multiplexent blocs par blocs les paquets détectés et que chacun des blocs multiplexés des paquets détectés soit écrit dans une cellule de la mémoire tampon (MP), et transmettent également un bit de signalisation (BD) en parallèle avec les premiers mots (B1) de chacun des blocs multiplexés aux moyens pour convertir (MC) à travers les moyens pour multiplexer (MRE), un bit de signalisation (BD) ayant un état logique prédéterminé ("1") seulement lorsque ledit premier mot de bloc est une étiquette (ET),

    et en ce que ledit système comprend

    des moyens (RR, MXC) recevant les premiers mots (B1) des blocs multiplexés (BC) à partir des moyens pour multiplexer et les étiquettes converties (ETa) à partir des moyens pour convertir (MC) pour écrire les premiers mots (B1 ≠ ET) des blocs autres que des premiers blocs de paquet et les étiquettes converties (ETa) dans la mémoire tampon (MP) respectivement en fonction des états des bits de signalisation (BD),

    des moyens (FL1 à FL8) associés respectivement aux multiplex sortants (S1 à S8) pour mémoriser les indications de longueur de paquet (IL) parallèlement aux adresses mémorisées dans les moyens d'adressage en lecture (FEP1 à FEP8), lesdites adresses mémorisées étant celles de cellules de la mémoire tampon (MP) contenant des premiers blocs de paquets, et,

    des moyens (CB1 à CB8) associés respectivement aux multiplex sortants (S1 à S8) et reliés aux moyens pour mémoriser (FEP1 à FEP8, FL1 à FL8) pour chacun calculer les adresses (AE, AE + 8, AE + 16...) de cellules de la mémoire tampon (MP) contenant les blocs (BC) d'un paquet (PQ) à transmettre dans le multiplex sortant associé (Sj) en fonction de l'adresse (AE) de la cellule mémorisant le premier bloc du paquet et du mot d'indication de longueur.

2. Système conforme à la revendication 1 caractérisé en ce que les moyens pour multiplexer comprennent des moyens (MRE) pour réaliser une conversion parallèle – diagonale des blocs (BC) de paquets détectés (PQ) transmis par les moyens d'entrée (CE1 à CE8), en ce que les moyens pour démultiplexer comprennent des moyens (MRS) pour réaliser une conversion diagonale – parallèle des blocs (BC) de paquets (PQ) lus dans la mémoire tampon (MP), et

en ce que la mémoire tampon (MP) comprend des sous – mémoires (M1 à M8) en nombre égal au nombre (I) de mots dans un bloc de paquet pour mémoriser respectivement les mots de chacun des blocs de paquet sous forme diagonale, et

des moyens (ADL1 à ADL8) connectés en cascade et respectivement associés aux sous – mémoires (M1 à M8) pour incrémenter l'adresse (AE) délivrée par les moyens pour calculer (CB1 à CB8) lors de la lecture d'un bloc de paquet afin de fournir une adresse d'une sous – cellule contenant un mot du bloc à chacune des sous – mémoires.

3. Système conforme à la revendication 1 ou 2, caractérisé en ce que, pour produire un bit de signalisation (BD), chacun des moyens d'entrée (CE1 à CE8) comprend des moyens (CT2) pour compter les bits dans chacun des paquets dans le multiplex entrant respectif (Ej), des moyens (CMP1, CT1) pour détecter des paquets de synchronisation (PV) transmis dans le multiplex entrant (Ej) afin d'initialiser (SYN) les moyens pour compter (CT2), des moyens (RL) commandés par les moyens pour compter (CT2) pour mémoriser l'indication de longueur mémorisée (IL) du paquet entrant, des moyens (CMP2) pour comparer le compte de bits (CT) dans des moyens pour compter avec l'indication de longueur mémorisée (IL) pour signaler la réception d'un dernier bloc du paquet et commander consécutivement l'initialisation des moyens pour compter (CT2), des premiers moyens (P7) connectés à des sorties prédéterminés (4 à 10) des moyens pour compter (CT2) pour signaler l'intervalle temporel pendant lequel est transmis l'étiquette (ET) du paquet (PQ) afin de déterminer l'état logique du bit de signalisation (DP, BD), et des seconds moyens (P8) connectés à des sorties prédéterminées (4 à 6) des moyens pour compter (CT2) pour signaler l'intervalle temporel pendant lequel est transmis le début d'un bloc (DB) de paquet.

4. Système conforme à la revendication 3, caractérisé en ce que chacun des moyens d'entrée (CEj) comprend une file tampon (FE) dans laquelle sont stockés temporairement en parallèle les mots de paquets entrants, des bits de début de bloc (DB) fournis par les seconds moyens pour signaler (P8) et les bits de signalisation (BD) correspondants à transmettre aux moyens pour multiplexer (MRE).

5. Système conforme à la revendication 1 ou 4, caractérisé en ce chacun des moyens (CBj) pour calculer comprend

des moyens (RC) pour incrémenter l'adresse (AL) délivrée par les moyens d'adressage en lecture correspondants (FEPj) après chaque lecture dans la mémoire tampon (MP) d'un bloc du paquet à transmettre, la nouvelle adresse obtenue (AL + 8) après une incrémentation étant l'adresse d'une cellule de la mémoire tampon contenant un bloc du même paquet succédant à celui précédemment lu dans la mémoire tampon (MP), et

des moyens pour décrémenter (RD) l'indication de longueur (IL) lue dans les moyens pour mémoriser correspondants (FLj) parallèlement à l'incrémentation de l'adresse (AL) afin de déterminer la lecture dans la mémoire tampon d'un dernier bloc du paquet, et consécutivement déclencher la lecture, dans les moyens d'adressage en lecture et les moyens pour mémoriser correspondants (FEPj, FLj), d'une autre adresse (AL) et d'une autre indication de longueur (IL) correspondant à un autre paquet à lire dans la mémoire tampon (MP) et destiné au même multiplex sortant (Sj).

**Claims**

1. System for switching packets (PQ) coming from a plurality of incoming time – division multiplex ways (E1 to E8) towards a plurality of outgoing time – division multiplex ways (S1 to S8), each packet (PQ) having a header comprising a label (ET),

said system comprising

several input means (CE1 to CE8) associated respectively with the incoming multiplex ways (E1 to E8) for detecting the packets (PQ) in the incoming multiplex ways and transmitting them in synchronism,

means (MRE) connected to the input means (E1 to E8) for multiplexing the detected packets,

means (MC) for converting the labels (ET) of the packets being multiplexed block by block into converted labels (ETa),

a buffer memory (MP) in which the multiplexed packets (PQ) are temporarily stored with the converted labels (ETa),

write addressing means (BT) for cyclically producing addresses (AE) of cells of the buffer memory (MP),

read addressing means (FEP1 to FEP8) associated respectively with the outgoing multiplex ways (S1 to S8) for memorizing addresses (AL) of buffer memory cells containing packets (PQ) being written so as to read and multiplex the packets as a function of the outgoing multiplex ways for which they are intended, and,

means (MRS) for demultiplexing the packets which are read in the buffer memory (MP) and transmitting them in the outgoing multiplex ways (S1 to S8),

characterized in that

each packet (PQ) is composed of a variable number (L) of word blocks (BC), each of the blocks containing a constant number of words (B1 to B8), the header of a packet being contained in a header of a first block (BC1) of the packet which comprises two words of which the first one is the label (ET) of the packet and the second one is a lenght indication (IL), and

the input means (CE2 to CE8) transmit in synchronism the detected packets block by block so that the multiplexing means (MRE) multiplex the detected packets block by block and that each of the multiplexed blocks of the detected packets is written in a cell of the buffer memory (MP), and also transmit a signalling bit (BD) in parallel with the first words (B1) of each of the multiplexed blocks to the converting means (MC) through the multiplexing means (MRE), a signalling bit (BD) having a predetermined logic state ("1") only when said first block word is a label (ET),

and in that said system comprises means (RR, MXC) receiving the first words (B1) of the multiplexed blocks (BC) from multiplexing means and the converted labels (ETa) from converting means (MC) for writing the first words (B1 ≠ ET) of the blocks other than first packet blocks and the converted labels (ETa) in the buffer memory (MP) as a function of the states of the signalling bits (BD), respectively,

means (FL1 to FL8) associated respectively with the outgoing multiplex ways (S1 to S8) for memorizing the packet length indications (IL) in parallel with the addresses memorized in the read addressing means (FEP1 to FEP8), said memorized addresses being those of cells of the buffer memory (MP) which contain first packet blocks, and

means (CB1 to CB8) associated respectively with the outgoing multiplex ways (S1 to S8) and connected to the memorizing means (FEP1 to FEP8, FL1 to FL8), each for calculating the addresses (AE, AE + 8, AE + 16, ...) of buffer memory (MP) cells containing the blocks (BC) of a packet (PQ) to be transmitted in the associated outgoing multiplex way (Sj) as a function of the address (AE) of the cell memorizing the first block of the packet and the length indication word.

2.  System according to claim 1, characterized in that the multiplexing means comprise means (MRE) for performing a parallel-diagonal conversion of the blocks (BC) of detected packet (PQ) transmitted by the input means (CE1 to CE8), in that the demultiplexing means comprise means (MRS) for performing a diagonal-parallel conversion of the packet (PQ) blocks read in the buffer memory (MP), and

in that the buffer memory (MP) comprises a number of sub-memories (M1 to M8) equal to the number (I) of words in a packet block for memorizing the words of each of the packet blocks in diagonal form, respectively, and

cascaded means (ADL1 to ADL8) respectively associated with the sub-memories (M1 to M8) for incrementing the address (AE) delivered by the calculating means (CB1 to CB8) during reading of a packet block so as to provide an address of a sub-cell containing a word of the block to each of the sub-memories.

3.  System according to claim 1 or 2, characterized in that, to produce a signalling bit (BD), each of the input means (CE1 to CE8) comprises means (CT2) for counting the bits in each of the packets in the respective incoming multiplex way (Ej), means (CMP1, CT1) for detecting synchronization packets (PV) transmitted in the incoming multiplex way (Ej) so as to reset (SYN) the counting means (CT2), means (RL) controlled by the counting means (CT2) for memorizing the memorized length indication (IL) of the incoming packet, means (CMP2) for comparing the count of bits (CT) in counting means with the memorized length indication (IL) so as to signal the reception of a last block of the packet and control consecutively the reset of the counting means (CT2), first means (P7) connected to predetermined outputs (4 to 10) of the counting means (CT2) for signalling the time interval during which the label (ET) of the packet (PQ) is transmitted so as to determine the logic state of the signalling bit (DP, BD), and second means (P8) connected to predetermined outputs (4 to 6) of the counting means (CT2) for signalling the time interval during which the beginning of a packet block (DB) is transmitted.

4. System according to claim 3, characterized in that each of the input means (CEj) comprises a buffer queue (FE) in which are temporarily stored in parallel the incoming packet words, block beginning bits (DB) supplied by the second signalling means (P8) and the corresponding signalling bits (BD) to be transmitted to the multiplexing means (MRE).

5. System according to claim 1 or 4, characterized in that each of the calculating means (CBj) comprises

means (RC) for incrementing the address (AL) delivered by the corresponding read addressing means (FEPj) after each reading in the buffer memory (MP) of a packet block to be transmitted, the new address obtained (AL + 8) after an increment being the address of a cell in the buffer memory containing a block of the same packet following that previously read in the buffer memory (MP), and

means (RD) for decrementing the length indication (IL) read in the corresponding memorizing means (FLj) in parallel with the incremention of the address (AL) so as to determine reading of a last block of the packet in the buffer memory, and consecutively trigger reading, in the read addressing means and the corresponding memorizing means (FEPj, FLj), of another address (AL) and another length indication (IL) corresponding to another packet to be read in the buffer memory (MP) and intended for the same outgoing multiplex way (Sj).

**Patentansprüche**

1. System zur Übertragung der von einer Anzahl von Eingangszeitmultiplexen (E1 bis E8) herkommenden Pakete (PQ) zu einer Anzahl von Ausgangszeitmultiplexen (S1 bis S8), wobei jedes Paket (PQ) einen ein Etikett (ET) umfassenden Kopf aufweist, wobei das System umfaßt

– mehrere Eingangsmittel (CE1 bis CE8), die jeweils den Eingangsmultiplexen (E1 bis E8) zugeordnet sind, um die Pakete (PQ) in den Eingangsmultiplexen zu erfassen und diese in Synchronismus zu übertragen,

– mit den Eingangsmitteln (E1 bis E8) verbundene Mittel (MRE) zum Multiplexen der erfaßten Pakete,

– Mittel (MC) zum blockweisen Umwandeln der Etiketten (ET) der gemultiplexten Pakete in umgewandelte Etiketten (ETa),

– einen Pufferspeicher (MP), in dem die gemultiplexten Pakete (PQ) mit den umgewandelten Etiketten (ETa) temporär gespeichert sind,

– Schreibadressierungsmittel (BT) zur zyklischen Erzeugung der Zellenadressen (AE) des Pufferspeichers (MP),

– Leseadressierungsmittel (FEP1 bis FEP8), die jeweils den Ausgangsmultiplexen (S1 bis S8) zugeordnet sind, um Zellenadressen (AL) des Pufferspeichers zu speichern, die geschriebene Pakete (PQ) enthalten, um die Pakete abhängig von den Ausgangsmultiplexen zu lesen und zu multiplexen, für die sie bestimmt sind, und

– Mittel (MRS) zum Demultiplexen der gelesenen Pakete im Pufferspeicher (MP) und zu deren Übertragung in die Ausgangsmultiplexe (S1 bis S8), dadurch **gekennzeichnet,** daß

– jedes Paket (PQ) aus einer veränderlichen Anzahl (L) von Wortblöcken (BC) besteht, wobei jeder der Blöcke Wörter (B1 bis B8) in konstanter Zahl enthält, wobei der Kopf eines Pakets in einem Kopf eines ersten Blocks (BC1) des Pakets enthalten ist, das zwei Wörter umfaßt, von denen das erste das Etikett (ET) des Pakets und das zweite eine Längenanzeige (IL) ist, und

– die Eingangsmittel (CE2 bis CE8) in Synchronismus die erfaßten Pakete blockweise übertragen, damit die Mittel zum Multiplexen (MRE) die erfaßten Pakete blockweise multiplexen und damit jeder der gemultiplexten Blöcke der erfaßten Pakete in eine Zelle des Pufferspeichers (MP) geschrieben wird, und ebenso ein Anzeigebit (BD) parallel mit den ersten Wörtern (B1) jedes der gemultiplexten Blöcke zu den Mitteln zum Umwandeln (MC) über die Mittel zum Multiplexen (MRE) übertragen, wobei ein Anzeigebit (BD) einen vorbestimmten logischen Zustand "1" lediglich aufweist, wenn das erste Wort des Blocks ein Etikett (ET) ist, und daß das System umfaßt

– Mittel (RR, MXC), die die ersten Wörter (B1) der gemultiplexten Blöcke (BC) ausgehend von den Mitteln zum Multiplexen und die umgewandelten Etiketten (ETa) ausgehend von den Mitteln zum Umwandeln (MC) aufnehmen, um die ersten Wörter (B1 ≠ ET) der Blöcke anders als die ersten Paketblöcke und die umgewandelten Etiketten (ETa) in den Pufferspeicher (MP) jeweils abhängig von den Zuständen der Anzeigebits (BD) zu schreiben,

- Mittel (FL1 bis FL8), die jeweils den Ausgangsmultiplexen (S1 bis S8) zugeordnet sind, um die Paketlängenanzeigen (IL) parallel zu den gespeicherten Adressen in den Leseadressierungsmitteln (FEP1 bis FEP8) zu speichern, wobei die gespeicherten Adressen diejenigen von Zellen des Pufferspeichers (MP) sind, enthaltend erste Paketblöcke, und

- Mittel (CB1 bis CB8), die jeweils den Ausgangsmultiplexen (S1 bis S8) zugeordnet und mit den Mitteln zum Speichern (FEP1 bis FEP8, FL1 bis FL8) verbunden sind, um jeweils die Adressen (AE, AE − 8, AE − 16...) von Zellen des Pufferspeichers (MP) zu berechnen, der die Blöcke (BC) eines in den zugeordneten Ausgangsmultiplex (SJ) zu übertragenden Pakets (PQ) abhängig von der Adresse (AE) der Zelle zu berechnen, die den ersten Block des Pakets und des Längenanzeigewortes speichert.

2. System nach Anspruch 1, dadurch **gekennzeichnet,** daß die Mittel zum Multiplexen Mittel (MRE) zum Ausführen einer Parallel − Diagonalumwandlung der Blöcke (BC) von durch die Eingangsmittel (CE1 bis CE8) übertragenen erfaßten Paketen (PQ) umfassen, daß die Mittel zum Demultiplexen Mittel (MRS) zum Ausführen einer Diagonal − Parallelumwandlung der Blöcke (BC) von im Pufferspeicher (MP) gelesenen Paketen (PQ) umfassen und

- daß der Pufferspeicher (MP) Unterspeicher (M1 bis M8) in der Zahl gleich der Zahl (I) der Wörter in einem Paketblock umfaßt, um jeweils die Wörter jedes der Paketblöcke in diagonaler Form zu speichern, und

- Mittel (ADL1 bis ADL8), die in Kaskade verbunden sind und jeweils den Unterspeichern (M1 bis M8) zugeordnet sind, um die durch die Mittel zum Berechnen (CB1 bis BC8) übergebene Adresse (AE) beim Lesen eines Paketblocks zu inkrementieren, um jedem der Unterspeicher eine Unterzellenadresse zu liefern, die ein Wort des Blocks enthält.

3. System nach Anspruch 1 oder 2, dadurch **gekennzeichnet,** daß zur Erzeugung eines Anzeigebits (BD) jedes der Eingangsmittel (CE1 bis CE8) Mittel (CT2) umfaßt, um die Bits in jedem der Pakete im jeweiligen Eingangsmultiplex (Ej), Mittel (CMP1, CT1) zum Erfassen der im Eingangsmultiplex (Ej) übertragenen Synchronisationspakete (PV), um die Mittel zum Zählen (CT2) zu initialisieren (SYN), durch die Mittel zum Zählen (CT2) gesteuerte Mittel (RL) zum Speichern der gespeicherten Länge (IL) des Eingangspakets, Mittel (CMP2) zum Vergleichen der Zählung von Bits (CT) in Mitteln zum Zählen mit der Anzeige der gespeicherten Länge (IL) zum Anzeigen des Empfangs eines letzten Blocks des Pakets und zum anschließenden Steuern der Initialisierung der Mittel zum Zählen (CT2), erste Mittel (P7), die mit vorbestimmten Ausgängen (4 bis 10) der Mittel zum Zählen (CT2) verbunden sind, um das Zeitintervall anzuzeigen, während dem das Etikett (EC) des Pakets (PQ) übertragen wird, um den logischen Zustand des Anzeigebits (DP, BD) zu bestimmen, und zweite Mittel (P8) umfaßt, die mit vorbestimmten Ausgängen (4 bis 6) der Mittel zum Zählen (CT2) verbunden sind, um das Zeitintervall anzuzeigen, während dem der Anfang eines Paketblocks (DB) übertragen wird.

4. System nach Anspruch 3, dadurch **gekennzeichnet,** daß jedes der Eingangsmittel (CEj) eine Pufferschlange (FE) umfaßt, in der temporär parallel die Wörter von Eingangspaketen, Blockanfangsbits (DB), die durch die zweiten Mittel zum Anzeigen (P8) geliefert worden sind und die zu den Mitteln zum Multiplexen (MRE) zu übertragenden entsprechenden Anzeigebits (BD) gespeichert sind.

5. System nach Anspruch 1 oder 4, dadurch **gekennzeichnet,** daß jedes der Mittel (CPj) zum Berechnen umfaßt

- Mittel (RC) zum Inkrementieren der Adresse (AL), die durch die entsprechenden Leseadressierungsmittel (FEPj) nach jedem Lesen im Pufferspeicher (MC) eines Blocks des zu übertragenden Pakets übergeben worden ist, wobei die neue erhaltene Adresse (AL + 8) nach einer Inkrementierung die Adresse einer Zelle des Pufferspeichers ist, die einen Block desselben Pakets folgend auf den zuvor im Pufferspeicher (MP) gelesenen ist, und

- Mittel zum Dekrementieren (RD) der in den entsprechenden Mitteln zum Speichern (FLj) gelesenen Längenanzeige (IL) parallel zur Inkrementierung der Adresse (AL), um das Lesen im Pufferspeicher eines letzten Blocks des Pakets zu bestimmen, und anschließend das Lesen in den Leseadressierungsmitteln und den entsprechenden Mitteln zum Speichern (FEPj, FLj) einer anderen Adresse (AL) und einer anderen Längenanzeige (IL) entsprechend einem im Pufferspeicher (MP) zu lesenden und für dasselbe Ausgangsmultiplex (Sj) bestimmten weiteren Paket auszulösen.

FIG.1

# FIG.2

CIRCUIT DE SYNCHRONISATION (FIG.3)

SY
DB
DP
DI
8F
Ej
He
PP
S/P

FE
DBS
BD
FILE - TAMPON (FIFO)
8F
DOj
PVE    FV~    PVL
H
CIRCUIT DE COMMANDE D'ECRITURE/LECTURE
CC

F3.j
CEj

CIRCUIT D'ENTREE

EP 0 301 934 B1

FIG.3

CIRCUIT D'AIGUILLAGE ET DE CONVERSION D'ETIQUETTE ⟩ ACE

FIG.4

FIG.8

CIRCUIT DE CALCUL
D'ADRESSES DE
BLOCS DE PAQUET

19

FIG.5

# FIG.6

FIG.7

EP 0 301 934 B1